# EUROPEAN PATENT SPECIFICATION

(11) **EP 2 637 333 B1**
(45) Date of publication and mention of the grant of the patent: **04.01.2017**
(21) Application number: 12305268.0
(22) Date of filing: 05.03.2012
(51) Int. Cl.: H04J 14/02

(54) **Optical TDM Backhauling Network**
Optisches TDM-Backhaul-Netzwerk
Réseau de retour TDM optique

(43) Date of publication of application: 11.09.2013
(73) Proprietor: ALCATEL LUCENT, 92100 Boulogne-Billancourt (FR)
(72) Inventor: Pfeiffer, Thomas, 70569 Stuttgart (DE)
(74) Representative: Wetzel, Emmanuelle

(56) References cited:
- WO-A1-2009/157609
- GROBE K ET AL: "PON Evolution from TDMA to WDM-PON", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-7, XP031391398, ISBN: 978-1-55752-856-8
- DARREN P SHEA ET AL: "Long-Reach Optical Access Technologies", IEEE NETWORK, IEEE SERVICE CENTER, NEW YORK, NY, US, vol. 21, no. 5, 1 September 2007 (2007-09-01), pages 5-11, XP011192382, ISSN: 0890-8044, DOI: 10.1109/MNET.2007.4305170

## Description

### Field of the invention

The invention relates to a remote node for a passive optical time division multiplex (TDM) backhauling network as well as a transmission system for a passive optical TDM backhauling network.

### Background

Passive optical time division multiplex (TDM) networks may be days used, for serving as a backhauling network for connecting wireless base stations to a core network.

As it is known, a passive optical network (PON) is a type of an optical access network, i.e. a network allowing a plurality of data transmission devices to be connected to a node of a core network (for instance, a metropolitan area network).

A PON typically comprises an optical line termination (OLT) and an optical distribution network (ODN). The ODN in turn comprises a plurality of optical links (typically comprising silica-based optical fibers) and passive optical components arranged so as to form a point-multipoint structure whose root is connected to the OLT. The OLT is typically located at a central office (CO) of the service provider. Each optical link of the OLT may be terminated at its far end by a respective optical network unit (ONU). Depending on the applications, an ONU may be located within a mobile network's base-station.

In a TDM PON, each ONU may communicate with the OLT by using a respective couple of wavelengths, comprising an upstream wavelength, which the ONU uses for transmission to the OLT, and a downstream wavelength, which the OLT uses for transmission to the ONU. The upstream wavelengths may be for instance located in the so-called C band, preferably in the range of 1530 nm to 1565 nm, whereas the downstream wavelengths may be for instance located in the so-called L band, preferably in the range of > 1565 nm.

In a WDM PON, the ODN typically comprises a so-called "remote node", a feeder optical fiber connecting the remote node to the OLT and a number of distribution optical fibers radiating from the remote node. Each distribution fiber may be terminated at its far end by an ONU.

The feeder fiber has a length typically ranging from about 5 km to about 40 km. The distribution fibers typically have a length ranging from some tens of meters to a few kilometers. The remote node is typically a passive node, which means that it comprises only passive components, which do not need power supply.

In the downstream direction, the OLT generates downstream optical signals at the downstream wavelengths associated to the ONUs, multiplexes them according to the known WDM technique and transmits them to the remote node along the feeder fiber. At the remote node, the downstream signals may be demultiplexed and each of them may then be forwarded to a respective ONU along a respective distribution fiber.

In the upstream direction, each ONU generates a respective upstream signal at the upstream wavelength associated thereto and transmits it along the respective distribution fiber to the remote node. The remote node multiplexes all the upstream signals received from the various ONUs according to the known WDM technique, and forwards them to the OLT through the feeder fiber. At the OLT, the upstream signals are de-multiplexed and subjected to subsequent processing.

Thus, a connection of mobile base stations of a mobile network to the core network can be realised, by connecting the mobile base station to an optical network unit of the passive optical network.

The document "Grobe K. et al ,'PON evolution from TDMA to WDM-PON', Optical Fiber Communication/National Fiber Optic Engineers Conference 2008. OFC/NFOEC 2008, IEEE, Piscataway, NJ, USA, 24 February 2008, ISBN: 978-1-55752-856-8" shows a wavelength-dependent multiplexing passive optical network, in which a remote node splits all downstream wavelengths received at the node onto respective output ports of the node.

The document "Darren P. Shea et al, 'Long-Reach Optical Access Technologies', IEEE Network, IEEE Service Center, New York, NY, US, vol. 21, No. 5, Sep. 1, 2007, XP011192382, ISSN: 0890-8044" shows a remote node, which splits any downstream wavelength coming from a central office by means of power-splitting onto all of the output ports towards optical network units of the passive optical network.

The document WO2009/15760 discloses a passive optical network, in which multiple cascaded remote nodes each split a downlink optical signal of a single mode by means of power-splitting towards respective optical network units.

### Summary

Proposed is a passive optical TDM backhauling network, which comprises different devices.

The network comprises a master optical line terminal, comprising
- a first optical line terminal transmitting a first optical TDM downstream signal at a first wavelength and
- a plurality of second optical line terminals transmitting respective second optical TDM downstream signals at respective different second wavelengths different from the first wavelength,
- a first wavelength division multiplex multiplexer, arranged to combine the second optical TDM downstream signals onto a second WDM multiplexer,
- the second WDM multiplexer being arranged to combine the first and the second optical TDM downstream signals onto a first end of an optical feeder fiber,
- a remote node, connectable at its input port to the other end of the optical feeder fiber,
- a WDM demultiplexer,
   o arranged to receive optical signals from an output port of the remote node and
   o arranged to demultiplex the first optical TDM downstream signal onto its first output port and one of the second optical TDM downstream signals onto its second output port,
- an optical power splitting coupler, arranged to split the one of the second optical TDM downstream signals received from the WDM demultiplexer onto its output ports,
wherein the remote node splits the first optical TDM downstream signal from its input port onto its output ports, by performing power splitting,
and wherein the remote node demultiplexes the second optical TDM downstream signals onto respective ones of its output ports, by performing wavelength dependent demultiplexing.

The advantages of the proposed passive optical TDM backhauling network are, that this type of network with such a network architecture can be used, for serving a first mobile base station with a first respective optical network unit via the first optical TDM downstream signal, wherein this first mobile base station may be a base station for a macro cell of a wireless network, while the second optical TDM downstream signals can be used for serving respective second optical network units of respective second mobile base stations of metro cells, that are geographically located within the mentioned macro cell.

The advantage here is, that due to the metro cells, that are located within the macro cell, only one distribution fibre is needed for connecting the remote node and the WDM demultiplexer located within the macro cell, which helps, to reduce station costs for bringing the distribution fibre out into the field.

Furthermore, the proposed network with the proposed network architecture has the advantage, that due to the wavelength dependent demultiplexing performed at the remote node for the second optical TDM downstream signals, that specific second optical TDM downstream signal, which is provided to the power splitting coupler, does not experience any severe splitting loss, before it is provided to the power splitters located within the macro cell. Therefore, optical network units of respective metro cell base stations can be connected to respective ports of the power splitter. Thus, in this proposed network architecture, one second optical TDM downstream signal may serve for data transmission towards the optical network unit of metro cells located within the associated macro cell.

The proposed network with the proposed network architecture even allows furthermore, to preferably connect an optical network unit of a further macro cell via a further WMD multiplexer to another port of the remote node, as well as to connect via the further WMD multiplexer and a further power splitting coupler, further optical network units of further metro cells located within the further macro cell.

Therefore, the proposed network architecture can be used for serving base stations of further macro cells as well as base stations for further metro cells, in the case that the proposed network is extended by a further WDM demultiplexers and further power splitting couplers, one of them per macro cell.

Thus, the proposed network architecture serves the demands present for typical scenarios in which multiple metro cells fall within one common macro cell, and wherein a backhauling network has to be provided, which may be extended later on for serving further macro cells as well as metro cells, such that this extension can be realised at a later point of time, which reduces the cost of installation at the point of time, when only a first or first few macro cells with metro cells corresponding to the macro cells are needed at a first point of time.

### Brief description of the Figures

Figure 1 shows a scenario of different mobile cells connected via a backhauling network to a core network.
Figure 2 shows a central office together with a macro cell within a serving area.
Figure 3 shows a network architecture according to the prior art.
Figure 4 shows a proposed optical backhauling network together with the proposed remote node.
Figure 5 shows an embodiment the proposed remote node.

### Description of Embodiments

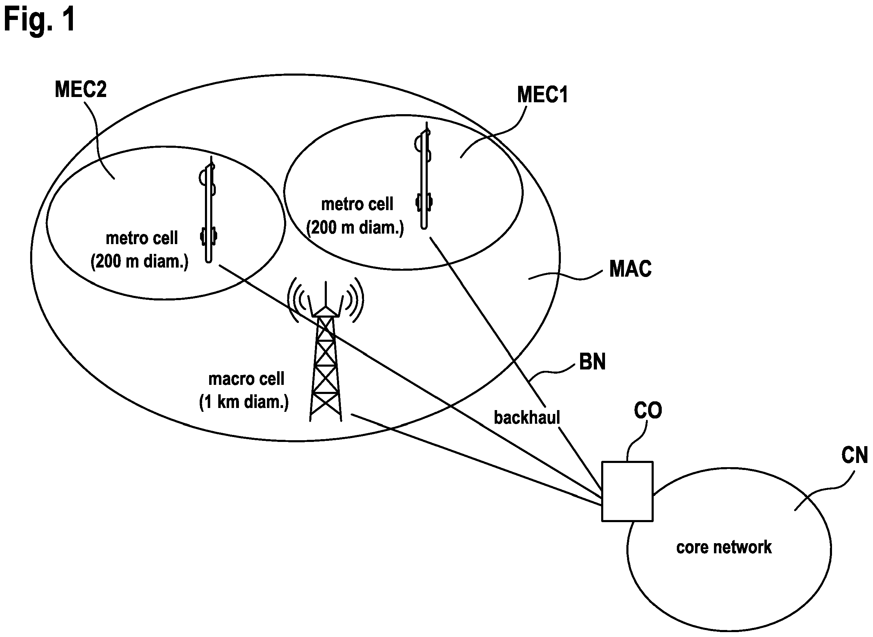

Figure 1 shows a core network CN, to which mobile base stations of a macro cell MAC as metro cells MEC1, MEC2 are connected via a backhauling network BN and a central office CO, which interconnects the backhauling network BN and the core network.

Typical scenarios are for example, that 16 metro cells cover a geographical area, which corresponds to one same macro cell.

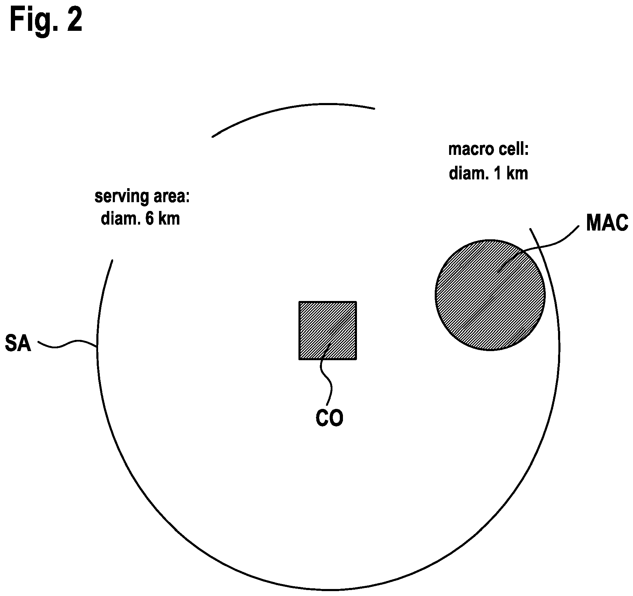

Figure 2 shows a serving area SA that should be served by the central office CO by means of a backhauling network, for connecting a macro cell MAC located within the serving area SA to a core network. A typical scenario is, that due to a diameter of the serving area SA, for example 6 km, as well as a typical diameter of a macro cell of for example 1 km, approximately up to 32 macro cells MAC should be served within such a serving area, wherein each macro cell covers a geographical area which is also to be covered by 16 metro cells.

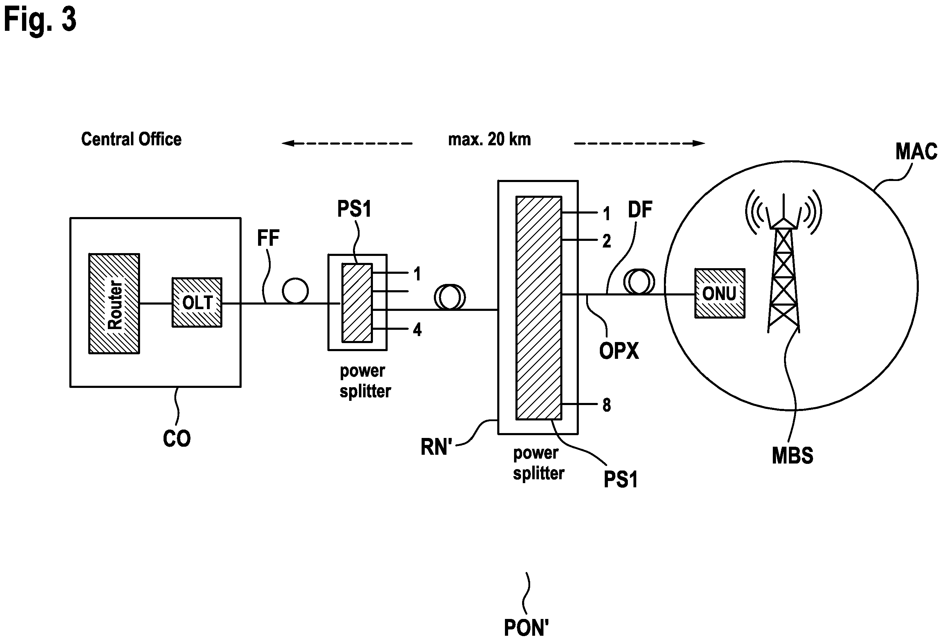

Figure 3 shows a passive optical network PON' according to the prior art.

An optical line terminal OLT located within the central office CO is connected via a feeder fibre directed or indirectly to a remote node RN'. The interconnection between the central office CO and the remote node RN' may be given by one direct feeder fibre FF, or a feeder fibre FF, which is interrupted by a power splitter PS1.

Within the remote node RN', a TDM optical downstream signal provided at the optical line terminal OLT is splitted by power splitting onto one or more distribution fibres DF, that are connected to respective output ports OPX of the power splitter PS1 of the remote node RN.

A base station MBS of a metro cell MAC may then be connected via an optical network unit ONU to a such a distribution fibre.

For serving up 8 different macro cells MAC, each mobile station MBS of a macro cell MAC can be connected to a respective output OPX of the remote node RN'.

Thus, according to the solution proposed by the prior art, up to 8 different mobile base stations of up to 8 different respective macro cells may be served by one optical TDM downstream signal provided by the optical line terminal OT located in the central office CO.

For serving also one or more stations of metro cells not shown in Figure 3 explicitly, further optical line terminals may be placed within the central office CO, wherein these further optical line terminals could then provide further optical TDM downstream signals, which may be multiplexed onto the feeder fibre FF.

For providing at least one further optical TDM downstream signal to other base stations of metro cells located within the macro cell MAC shown in Figure 3, such a further optical TDM downstream signal may then be demultiplexed at the end of the distribution fibre DF reaching the macro cell MAC.

For serving multiple base stations of multiple metro cells, this further optical TDM downstream signal may then be provided to different optical network units of corresponding mobile stations of corresponding different metro cells, by performing also power splitting on this further optical TDM downstream signal.

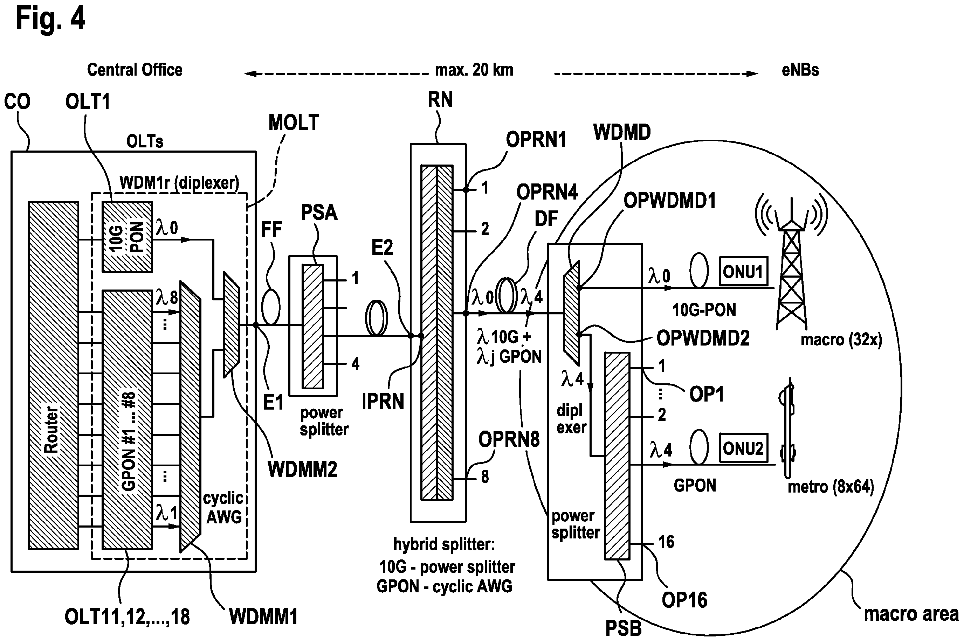

The proposed solution described now in detail with regard to Figure 4 has the advantage, that the amount of power splitting performed on optical TDM downstream signals serving mobile base stations of metro cells is reduced in comparison to the solution of the prior art, which allows to actually serve a sufficient number of mobile base stations of metro cells within the serving area, in order to allow a sufficient number of metro cells within macro cells as well as in total also a sufficient number of macro cells being all together served by one same central office.

According to Figure 4, the central office CO contains a master optical line terminal MOLT, within which one optical line terminal OLT1 transmits a first optical TM downstream signal at the first wavelength λ0.

Further optical line terminals OLT11, ..., OLT1 8 are also located within the master optical line terminal MOLT, for transmitting respective second optical TDM downstream signals at respective different second wavelengths λ1, ...,λ8.

The second wavelengths λ1..., λ8 are different from the first wavelength λ0.

The optical line terminals OLT1, OLT11,..., OLT18 are connected to a router, which provides an IP interface to the core network not shown explicitly in Figure 4.

A wavelength division multiplexing (WDM) multiplexer WDMM1 is located within the master optical line terminal MOLT. This WDM multiplexer WDMM1 is connected to the optical line terminals OLT11, ..., OLT18 and combines the respective second optical TDM downstream signals onto another WDM multiplexer WDMM2.

The second WDM multiplexer WDMM2 combines the first optical TDM downstream signal of the wavelength λ0 and the further optical TDM downstream signals of the wavelengths λ1 ..., λ8.

The WDM multiplexer WDMM2 combines the optical TM downstream signals onto a first end E1 of an optical feeder fibre FF.

The optical feeder fibre FF is also connected at its other end E2 to a remote node RN. The optical feeder fibre FF is preferably interrupted by a power splitter PSA, which performs power splitting for all optical TDM downstream signals equally.

The remote node RN is connected at its input port IPRN to the other end E2 of the optical feeder fibre FF.

The remote node RN splits the optical TDM downstream signal of the wavelength λ0 from its input port IPRN onto its output ports OPRN1, ... OPRN8, by performing power splitting.

Furthermore, the remote node RN demultiplexes the further optical TDM downstream signals of the wavelengths λ1, ..., λ8 onto respective ones of its output ports OPRN1,...OPRN8, by performing wavelength-dependent demultiplexing.

In the example shown in Figure 4, the distribution fibre DF connected to the output port OPRN4 of the remote nodes RN thus is provided by the remote node RN with the optical TDM downstream signal of the wavelength λ0 as well as the optical TDM downstream signals of the wavelength λ4.

In other words, each of the output ports OPRN1, ..., OPRN8 is provided with the optical TDM downstream signal of the wavelength λ0, while each of the output ports OPRN1, .. OPRN8 is provided also with only one of the optical TDM downstream signals of the wavelengths λ1, ..., λ8.

The distribution fibre DF interconnects one of the output ports OPRN1, ..., OPRN8 of the remote node RN with a WDM demultiplexer WDMD.

The WDM demultiplexer WDMD demultiplexes the optical TDM downstream signal of the wavelength λ0 onto its first output port OPWDMD1, while it also demultiplexes the optical TDM downstream signal of the wavelength λ4 onto its second output port OPWDMD2.

A power splitter PSB performs power splitting on this optical TDM downstream signal of the wavelength λ4 received from the WDM demultiplexer WDMD. Thus, the optical TDM downstream signal of the wavelength λ4 is split by means of power splitting onto the output ports OP1,..., OP16 of the power splitter PSB.

The output port OPWDMD1 of the WDM demultiplexer WDMD may be connected to an optical network unit ONU1 of another base station of a macro cell.

Furthermore, respective optical network units ONU2 of base stations of metro cells may be connected to respective output ports OP1, ..., OP16 of the power splitter.

By this, the optical TDM downstream signal of the wavelength λ0 is used for data transmission between the central office CO and the base station of the macro cell, while the optical TDM downstream signal of the wavelength λ4 is used for providing data transmission from the central office CO to those mobile stations of those metro cells, which falls into the macro cell.

The network proposed with regards to Figure 4 has the advantages previously lined out in the summary, as it has been described above.

The optical line terminals OLT1, OLT11, ..., OLT18 are operable to perform statistical multiplexing for achieving a load balancing of data traffic transported by the optical line terminals OLT1, OLT11, ..., OLT18 to the optical network units ONU1, ONU2.

Such load balancing is of advantage, since by this the different macro cells and metro cells may be provided with varying data rates by the proposed passive optical TDM backhauling network.

The WDM multiplexer WDMM1 is preferably and arrayed waveguide grating.

Furthermore, the remote node RN preferably contains at least one arrayed waveguide grating to demultiplex the optical TDM downstream signals of the wavelengths λ1, ..., λ8 at the respective output ports OPRN1, ..., OPRN8 of the remote node RN.

Even more preferably, these arrayed waveguide gratings are cyclic arrayed waveguide gratings. This has the advantage, that each one of the multiple input ports or multiple output ports of these arrayed waveguide gratings have for each one port not only one passband within which an optical TDM downstream signal may be transmitted, but multiple passbands. Thus, also multiple passbands per port will be given for one specific port of an arrayed waveguide grating through which an optical network unit ONU1, ONU2 may transmit a respective upstream signal to the optical line terminals OLT1, OLT11,..., OLT18. Thus, the optical network units ONU1, ONU2 will not have to match their wavelength of a respective upstream signal for matching one specific passband exactly, but may perform matching of their wavelengths to one out of multiple passband by modifying their wavelength for the upstream signal. This allows, to counteract wavelength drifting within an optical network unit ONU1, ONU2 by means of heating, such an amount of heating is needed for matching the wavelength of the respective upstream signal to a next one of the multiple pass bands of a port of the cyclic arrayed waveguide grating.

The first output port OPWDMD1 of the WDM demultiplexer WDMD is connected to a first optical network unit ONU1, that is operable to receive the optical TDM downstream signal of the wavelength λ0.

The output ports OP1, ...,OP16 of the optical power splitting coupler PSB are connected to the respective optical network units ONU2, which are operable to receive respective one of the optical TDM downstream signals of the wavelengths λ1, ..., λ8.

The feeder fiber FF preferably comprises a power splitter PSA, which splits the optical TDM downstream signals of the wavelengths λ0, λ1, ..., λ8, by performing power splitting.

This further power splitter PSA allows to increase the number of macro and metro cells provided with downstream signals in the proposed network by a factor, which is equal to the number of output ports of the power splitter PSA.

In this example, the power splitter PSA contains four output pods, which means in turn, that this factor of four together with the factor as the number of output ports of the remote node RN, which is the number eight, determines the number of macro cells that may be provided with optical TDM downstream signals via the first optical line terminal OLT1.

In this example, the number of macro cells that may be connected to the proposed optical TDM backhauling network is 4 x 8=32.

Furthermore, the number of metro cells that may be provided overall within one macro cell is determined by the number of output ports OP1,..., OP16 of the power splitter PSB, in this example sixteen metro cells per single macro cell. Due to the power splitter PSA having four output ports and also due to the number output ports OPRN,..., OPRN8 of the remote node RN, the number eight, the overall number of metro cells being able to be served by the proposed optical TDM backhauling network is 8 x 4 x 16 = 32 x 16.

Due to the fact, that the remote node RN performs power splitting for the optical TDM downstream signal having the wavelength λ0 coming from the line terminal OLT1, but at the same time performs WDM demultiplexing for the optical TDM downstream signals of the wavelengths λ1, ..., λ8 of the optical line terminals OLT11, ..., OLT18, it is achieved, that the amount of power splitting that one optical TDM downstream signal provided by one of the line terminals OLT11, .., OLT18 experiences is a factor of power splitting in this example of 1/(4 x 16) = 1/64 . If the power splitter PSA is not present, the amount of power splitting that an optical TDM downstream signal of a metro cell experiences is 1/16. Thus, the advantage is, that the amount of power splitting that an optical TDM downstream signal of the wavelength λ1,..., λ8 experiences is smaller by a factor of eight compared to the amount of power splitting experienced by the optical TDM downstream signal of the wavelength λ0, provided by the line terminal OLT 1.

Therefore, in this example it is possible to provide up to sixteen metro cells per macro cell in this optical TDM backhauling network. At the same time, the amount of power splitting performed for the optical TDM downstream signal serving the metro cells is kept within a reasonable limit.

The proposed network is made possible, by the remote node RN, which comprises an input port IPRN and a plurality of output ports OPRN1,..., OPRN8. The remote node RN is operable to split the optical TDM downstream signal of the wavelength λ0 from its input port IPRN onto its output ports OPRN1, .., OPRN8, by performing power splitting. At the same time, the remote node RN is operable to route the optical TDM downstream signal of the wavelengths λ1, ..., λ8, which differ from the wavelength λ0, on the respective ones of the output port OPRN1, ..., OPRN8, by performing WDMD multiplexing. Thus, the advantage of clipping the amount of power splitting performed on optical TDM downstream signals of the wavelengths λ1,..., λ8 within the reasonable limit is achieved as it has been previously described in detail with regard to the proposed optical TDM backhauling network. Thus, the remote node RN is the key element for allowing a network architecture of the proposed optical TDM backhauling network as outlined within regard to Figure 4.

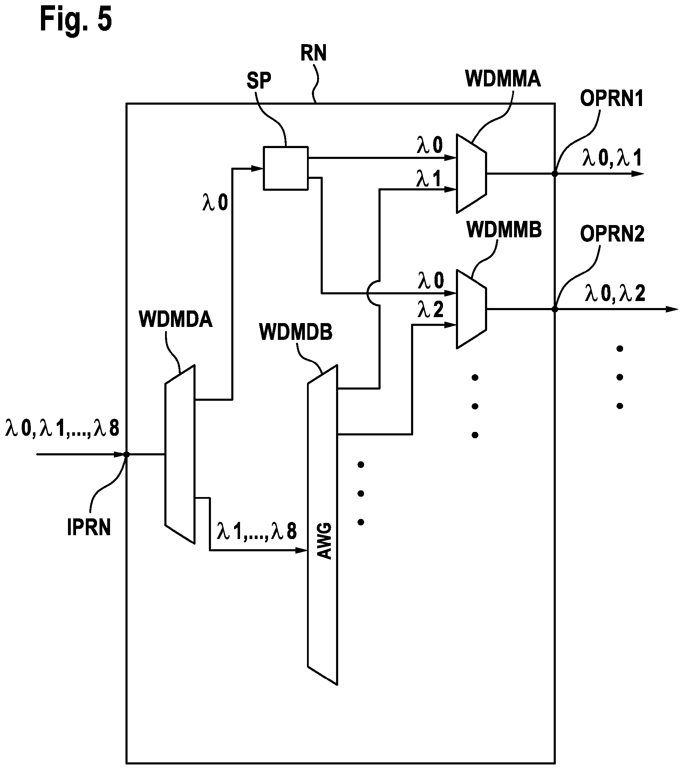

Figure 5 shows an embodiment of the proposed remote node RN, which is shown in Figure 5 with its input port IPRN as well as its output ports OPRN1, OPRN2. For reasons of simplicity, only the first three output ports OPRN1, OPRN2 are shown, while for the example give in the Figures 4 and also the one here of Figure 5, the remote nodes contains up to eight output ports.

The optical TDM downstream signals coming in at the input port IPRN are demultiplexed by WDM demultiplexing via a WDM demultiplexer WDMDA. This demultiplexer WDMDA passes the optical TDM downstream signal of the wavelength λ0 to a splitting unit SP, which performs power splitting of the optical TDM downstream signals of the wavelength λ0. This splitting unit SP provides the splitted signal of the wavelength λ0 to the WDM multiplexing units WDMMA, WDMMB, wherein for each output port OPRN1, OPRN2 the remote node RN contains a respective WDM demultiplexing unit WDMMA, WDMMB. The WDM demultiplexing unit WDMDA demultiplexes the optical TDM downstream signals of the wavelengths λ1, ..., λ8 onto a further WDM demultiplexing unit WDMDB. This demultiplexing unit WDMDB is preferably an AWG, as it has been described previously with regard to Figure 4. Furthermore preferably, the WDM demultiplexing unit WDMDB is a cyclic arrayed waveguide grating. This demultiplexing unit WDMDB provides the optical TDM downstream signals of the wavelengths λ1, ... , λ8 onto the respective WDM multiplexing units WDMMA, WDMMB, of the respective output ports OPRN1, OPRN2.

The structure of the remote node RN shown in Figure 5 is depicted for optical TDM downstream signals passing from the input port IPRN towards the output ports OPRN1, OPRN2.

Preferably the remote node RN, contains a similar structure with similar elements or sub-devices for passing optical TDM upstream signals from the ports OPRN1, OPRN2 towards the port IPRN1 in the direction from the optical network units towards the optical line terminals.

## Claims

1. Passive optical TDM backhauling network, comprising
- a master optical line terminal (MOLT), comprising
o a first optical line terminal (OLT1) transmitting a first optical TDM downstream signal at a first wavelength (λ0),
- a remote node (RN), connectable at its input port (IPRN) to the other end (E2) of said optical feeder fiber (FF),
wherein said remote node (RN) splits said first optical TDM downstream signal from its input port (IPRN) onto its output ports (OPRN1, ..., OPRN8), by performing power splitting,
**characterized, in that** said master optical line terminal (MOLT) comprises furthermore
o a plurality of second optical line terminals (OLT11, ..., OLT18) transmitting respective second optical TDM downstream signals at respective different second wavelengths (λ1, ..., λ8) different from said first wavelength (λ0),
o a first wavelength division multiplex (WDM) multiplexer (WDMM1), arranged to combine said second optical TDM downstream signals onto a second WDM multiplexer (WDMM2),
o said second WDM multiplexer (WDMM2) being arranged to combine said first and said second optical TDM downstream signals onto a first end (E1) of an optical feeder fiber (FF),
wherein said network comprises furthermore
- a WDM demultiplexer (WDMD),
o arranged to receive optical signals from an output port (OPRN4) of said remote node (RN) and
o arranged to demultiplex said first optical TDM downstream signal onto its first output port (OPWDMD1) and one of said second optical TDM downstream signals onto its second output port (OPWDMD2), and
- an optical power splitting coupler (PSB), arranged to split said one of said second optical TDM downstream signals received from said WDM demultiplexer (WDMD) onto its output ports (OP1, ..., OP16),
whereby said remote node (RN) is adapted to demultiplex said second optical TDM downstream signals onto respective ones of its output ports (OPRN1, ..., OPRN8), by performing wavelength dependent demultiplexing.

2. Passive optical TDM backhauling network according to claim 1,
wherein said optical line terminals (OLT1, OLT11, ..., OLT18) are operable to perform statistical multiplexing.

3. Passive optical TDM backhauling network according to claim 1,
wherein said first WDM multiplexer (WDMM1) is a first arrayed waveguide grating (cyclic AWG),
and wherein said remote node (RN) contains at least one second arrayed waveguide grating (AWG) arranged to demultiplex said second optical TDM downstream signals onto respective ones of said output ports (OPRN1, ..., OPRN8) of said remote node (RN).

4. Passive optical TDM backhauling network according to claim 3,
wherein said first and said second arrayed waveguide gratings (cyclic AWG, AWG) are cyclic arrayed waveguide gratings.

5. Passive optical TDM backhauling network according to claim 1,
wherein said first output port (OWDMD1) of said WDM demultiplexer (WDMD) is connected to a first optical network unit (ONU1), operable to receive said first optical TDM downstream signal,
and wherein said output ports (OP1, ..., OP16) of said optical power splitting coupler (PSB) are connected to respective second optical network units (ONU2), operable to receive respective ones of said second optical TDM downstream signals.

6. Passive optical TDM backhauling network according to claim 1,
wherein said feeder fiber (FF) comprises furthermore a further power splitter coupler (PSA) splitting said first and second optical TDM downstream signals, by performing power splitting.

7. Remote node (RN) for a passive optical TDM backhauling network,
comprising an input port (IPRN) and a plurality of output ports (OPRN1, ..., OPRN8), wherein said remote node (RN) is operable to split a first optical TDM downstream signal of a first wavelength (λ0) from its input port (IPRN) onto said output ports (OPRN1, ..., OPRN8), by performing power splitting,
**characterized in that** said remote node (RN) is operable to route second optical TDM downstream signals of respective second wavelengths (λ1, ..., λ8), different from said first wavelength (λ0), onto respective ones of said output ports (OPRN1, ..., OPRN8), by performing WDM demultiplexing.

8. Remote node according to claim 7,
wherein said remote node (RN) contains at least one arrayed waveguide grating (AWG) arranged to demultiplex said second optical TDM downstream signals onto respective ones of said output ports (OPRN1, ..., OPRN8).

9. Remote node according to claim 8,
wherein said arrayed waveguide grating (AWG) is a cyclic arrayed waveguide grating.

## Patentansprüche

1. Passives optisches TDM-Backhaul-Netz, umfassend
- ein optisches Master-Leitungsendgerät (MOLT), umfassend
o ein erstes optisches Leitungsendgerät (OLT1), das ein erstes optisches TDM-Abwärtssignal bei einer ersten Wellenlänge (λ0) überträgt,
- einen entfernten Knoten (RN), der an seinem Eingangsport (IPRN) mit dem anderen Ende (E2) der besagten optischen Zuleitungsfaser (FF) verbunden werden kann,
wobei der besagte entfernte Knoten (RN) das erste optische TDM-Abwärtssignal von seinem Eingangsport (IPRN) auf seine Ausgangsports (OPRN1, ..., OPRN8) durch Ausführen einer Leitungsverzweigung verzweigt,
**dadurch gekennzeichnet, dass** das besagte optische Master-Leitungsendgerät (MOLT) weiterhin Folgendes umfasst:
o eine Vielzahl von zweiten optischen Leitungsendgeräten (OLT11, ..., OLT18), die jeweilige zweite optische TDM-Abwärtssignale bei jeweiligen unterschiedlichen zweiten Wellenlängen (λ1, ..., λ8) übertragen, die sich von der besagten ersten Wellenlänge (λ0) unterscheiden,
o einen ersten Wellenlängenmultiplex (WDM)-Multiplexer (WDMM1), der angeordnet ist, um die besagten zweiten optischen TDM-Abwärtssignale auf einem zweiten WDM-Multiplexer (WDMM2) zu vereinen,
o wobei der besagte zweite WDM-Multiplexer (WDMM2) angeordnet ist, um die besagten ersten und die besagten zweiten optischen TDM-Abwärtssignale auf einem ersten Ende (E1) einer optischen Zuleitungsfaser (FF) zu vereinen,
wobei das besagte Netz weiterhin Folgendes umfasst:
- einen WDM-Demultiplexer (WDMD),
o der angeordnet ist, um optische Signale von einem Ausgangsport (OPRN4) des besagten entfernten Knotens (RN) zu empfangen, und
o der angeordnet ist, um das besagte erste optische TDM-Abwärtssignal auf seinem ersten Ausgangsport (OPWDMD1) und eines der besagten zweiten optischen TDM-Abwärtssignale auf seinem zweiten Ausgangsport (OPWDMD2) zu demultiplexen, und
- einen optischen Leistungsverzweigungskoppler (PSB), der angeordnet ist, um das besagte eine der besagten zweiten optischen TDM-Abwärtssignale, das von dem besagten WDM-Demultiplexer (WDMD) empfangen wird, auf seine Ausgangsports (OP1, ..., OP16) zu verzweigen,
wobei der besagte entfernte Knoten (RN) angepasst ist, um die besagten zweiten optischen TDM-Abwärtssignale auf seinen Ausgangsports (OPRN1, ..., OPRN8) durch Ausführen eines wellenlängenabhängigen Demultiplexverfahrens zu demultiplexen.

2. Passives optisches TDM-Backhaul-Netz nach Anspruch 1,
wobei die besagten optischen Leitungsendgeräte (OLT1, OLT11, ..., OLT18) betriebsfähig sind, um ein statistisches Multiplexverfahren auszuführen.

3. Passives optisches TDM-Backhaul-Netz nach Anspruch 1,
wobei der besagte erste WDM-Multiplexer (WDMM1) ein erstes Arrayed-Waveguide-Grating (zyklisches AWG) ist,
und wobei der besagte entfernte Knoten (RN) mindestens ein zweites Arrayed-Waveguide-Grating (AWG) enthält, das angeordnet ist, um die besagten zweiten optischen TDM-Abwärtssignale auf jeweiligen der besagten Ausgangsports (OPRN1, ..., OPRN8) des besagten entfernten Knotens (RN) zu demultiplexen.

4. Passives optisches TDM-Backhaul-Netz nach Anspruch 3,
wobei das besagte erste und das besagte zweite Arrayed-Waveguide-Grating (zyklisches AWG, AWG) zyklische Arrayed-Waveguide-Gratings sind.

5. Passives optisches TDM-Backhaul-Netz nach Anspruch 1,
wobei der besagte erste Ausgangsport (OWDMD1) des besagten WDM-Demultiplexers (WDMD) mit einer ersten optischen Netzeinheit (ONU1) verbunden ist, die betriebsfähig ist, um das besagte erste optische TDM-Abwärtssignal zu empfangen,
und wobei die besagten Ausgangsports (OP1, ..., OP16) des besagten optischen Leistungsverzweigungskopplers (PSB) mit jeweiligen zweiten optischen Netzeinheiten (ONU2) verbunden sind, die betriebsfähig sind, um jeweilige der besagten zweiten optischen TDM-Abwärtssignale zu empfangen.

6. Passives optisches TDM-Backhaul-Netz nach Anspruch 1,
wobei die besagte Zuleitungsfaser (FF) weiterhin einen weiteren Leistungsverzweigungskoppler (PSA) umfasst, der die besagten ersten und zweiten optischen TDM-Abwärtssignale durch Ausführen einer Leistungsverzweigung verzweigt.

7. Entfernter Knoten (RN) für ein passives optisches TDM-Backhaul-Netz, umfassend einen Eingangsport (IPRN) und eine Vielzahl von Ausgangsports (OPRN1, ..., OPRN8), wobei der besagte entfernte Knoten (RN) betriebsfähig ist, um ein erstes optisches TDM-Abwärtssignal einer ersten Wellenlänge (λ0) von seinem Eingangsport (IPRN) auf die besagten Ausgangsports (OPRN1, ..., OPRN8) durch Ausführen einer Leistungsverzweigung zu verzweigen, **dadurch gekennzeichnet, dass** der besagte entfernte Knoten (RN) betriebsfähig ist, um zweite optische TDM-Abwärtssignale jeweiliger zweiter Wellenlängen (λ1, ..., λ8), die sich von der besagten ersten Wellenlänge (λ0) unterscheiden, auf jeweilige der besagten Ausgangsports (OPRN1, ..., OPRN8) durch Ausführen eines WDM-Demultiplexverfahrens zu routen.

8. Entfernter Knoten nach Anspruch 7,
wobei der besagte entfernte Knoten (RN) mindestens ein Arrayed-Waveguide-Grating (AWG) enthält, das angeordnet ist, um die besagten zweiten optischen TDM-Abwärtssignale auf jeweiligen der besagten Ausgangsports (OPRN1, ..., OPRN8) zu demultiplexen.

9. Entfernter Knoten nach Anspruch 8,
wobei das besagte Arrayed-Waveguide-Grating (AWG) ein zyklisches Arrayed-Waveguide-Grating ist.

## Revendications

1. Réseau optique passif de backhaul TDM, comprenant
- un terminal de ligne optique maître (MOLT), comprenant
o un premier terminal de ligne optique (OLT1) émettant un premier signal optique TDM descendant à une première longueur d'onde (λ0),
- un noeud distant (RN), pouvant être connecté sur son port d'entrée (IPRN) à l'autre extrémité (E2) de ladite fibre optique d'amenée (FF),
dans lequel ledit noeud distant (RN) divise ledit premier signal optique TDM descendant de son port d'entrée (IPRN) sur ses ports de sortie (OPRN1...OPRN8), en réalisant une division de puissance,
**caractérisé en ce que** ledit terminal de ligne optique maître (MOLT) comprend en outre
o une pluralité de deuxièmes terminaux de ligne optique (OLT11...OLT18) émettant des deuxièmes signaux optiques TDM descendants correspondants à des deuxièmes longueurs d'onde correspondantes (λ1...λ8) différentes de ladite première longueur d'onde (λ0),
o un premier multiplexeur (WDMM1) à multiplexage par répartition en longueur d'onde (WDM), conçu pour combiner lesdits deuxièmes signaux optiques TDM descendants sur un deuxième multiplexeur WDM (WDMM2),
o ledit deuxième multiplexeur WDM (WDMM2) étant conçu pour combiner lesdits premiers et lesdits deuxièmes signaux optiques TDM descendants sur une première extrémité (E1) d'une fibre optique d'amenée (FF),
dans lequel ledit réseau comprend en outre
- un démultiplexeur WDM (WDMD),
o conçu pour recevoir des signaux optiques en provenance d'un port de sortie (OPRN4) dudit noeud distant (RN) et
o conçu pour démultiplexer ledit premier signal optique TDM descendant sur son premier port de sortie (OPWDMD1) et l'un desdits deuxièmes signaux optiques TDM descendants sur son deuxième port de sortie (OPWDMD2), et
- un coupleur diviseur de puissance optique (PSB), conçu pour diviser l'un desdits deuxièmes signaux optiques TDM descendants reçus dudit démultiplexeur WDM (WDMD) sur ses ports de sortie (OP1...OP16),
par lequel ledit noeud distant (RN) est adapté pour démultiplexer lesdits deuxièmes signaux optiques TDM descendants sur ses ports de sortie correspondants (OPRN1...OPRN8), en réalisant un démultiplexage en fonction de la longueur d'onde.

2. Réseau optique passif de backhaul TDM selon la revendication 1, dans lequel lesdits terminaux de ligne optique (OLT1, OLT11...OLT18) permettent de réaliser un multiplexage statistique.

3. Réseau optique passif de backhaul TDM selon la revendication 1,
dans lequel ledit premier multiplexeur WDM (WDMM1) est un premier réseau sélectif planaire (AWG cyclique),
et dans lequel ledit noeud distant (RN) contient au moins un deuxième réseau sélectif planaire (AWG) conçu pour démultiplexer lesdits deuxièmes signaux optiques TDM descendants sur lesdits ports de sortie correspondants (OPRN1...OPRN8) dudit noeud distant (RN).

4. Réseau optique passif de backhaul TDM selon la revendication 3, dans lequel ledit premier et ledit deuxième réseaux sélectifs planaires (AWG cyclique, AWG) sont des réseaux sélectifs planaires cycliques.

5. Réseau optique passif de backhaul TDM selon la revendication 1,
dans lequel ledit premier port de sortie (OWDMD1) dudit démultiplexeur WDM (WDMD) est connecté à une première unité de réseau optique (ONU1), permettant de recevoir ledit premier signal optique TDM descendant,
et dans lequel lesdits ports de sortie (OP1...OP16) dudit coupleur diviseur de puissance optique (PSB) sont connectés à des deuxièmes unités de réseau optique correspondantes (ONU2), permettant de recevoir lesdits deuxièmes signaux optiques TDM descendants correspondants.

6. Réseau optique passif de backhaul TDM selon la revendication 1, dans lequel ladite fibre d'amenée (FF) comprend en outre un autre coupleur diviseur de puissance (PSA) pour diviser lesdits premiers et deuxièmes signaux TDM descendants, en réalisant une division de puissance.

7. Noeud distant (RN) pour un réseau optique passif de backhaul TDM,
comprenant un port d'entrée (IPRN) et une pluralité de ports de sortie (OPRN1...OPRN8), dans lequel ledit noeud distant (RN) permet de diviser un premier signal optique TDM descendant d'une première longueur d'onde (λ0) de son port d'entrée (IPRN) sur lesdits ports de sortie (OPRN1...OPRN8), en réalisant une division de puissance,
**caractérisé en ce que** ledit noeud distant (RN) permet de router les deuxièmes signaux optiques TDM descendants de longueurs d'onde correspondantes (λ1...λ8), différentes de ladite première longueur d'onde (λ0), sur lesdits ports de sortie correspondants (OPRN1...OPRN8), en réalisant un démultiplexage WDM.

8. Noeud distant selon la revendication 7, dans lequel ledit noeud distant (RN) contient au moins un réseau sélectif planaire (AWG) conçu pour démultiplexer lesdits deuxièmes signaux optiques TDM descendants sur lesdits ports de sortie correspondants (OPRN1...OPRN8).

9. Noeud distant selon la revendication 8, dans lequel ledit réseau sélectif planaire (AWG) est un réseau sélectif planaire cyclique.
